# EUROPEAN PATENT APPLICATION

(11) **EP 3 355 005 A1**
(43) Date of publication of application: **01.08.2018**
(21) Application number: 16855365.9
(22) Date of filing: 07.10.2016
(51) Int. Cl.: F25C 1/22, F25C 1/04

(54) **ICE TRAY MANUFACTURING METHOD**

(30) Priority: 12.10.2015 JP 2015201669
(71) Applicant: UACJ Corporation, Tokyo 100-0004 (JP)
(72) Inventor: ITOH Yasunaga, Tokyo 100-0004 (JP); SAKODA Shoichi, Tokyo 100-0004 (JP); YAMAYOSHI Tomoki, Tokyo 100-0004 (JP)
(74) Representative: Kramer Barske Schmidtchen Patentanwälte PartG mbB
(86) International application number: PCT/JP2016/079970
(87) International publication number: WO 2017/065111

(57) **Abstract**

Provided is a method for manufacturing an ice making tray (1) that exhibits stable brazability. First, a base plate (10) formed of a brazing sheet (14) is prepared. The brazing sheet (14) includes a core material (11) composed of an aluminum alloy, and filler metal layers (12a) and (12b) provided on both surfaces of the core material (11). Each of the filler metal layers (12a) and (12b) includes a first layer (121) composed of an aluminum alloy in which the Mg content is restricted to 0.15% or less; and a second layer (122) positioned closer to the core material (11) than the first layer (121) and composed of an aluminum alloy containing Mg: 0.2 to 5%. At least one of the first layer (121) and the second layer (122) further contain Si: 4 to 13%. Next, a partition member (20) and a flow passage forming member (30) are assembled to the base plate (10). After that, these are brazed through the filler metal layers (12a) and (12b) without using any flux.

## Description

### TECHNICAL FIELD

The present invention relates to a method for manufacturing an ice making tray.

### BACKGROUND ART

Conventionally, there have been ice making trays of an aluminum alloy, in which a partition defining a plurality of ice making compartments in a grid pattern is joined to one surface of a plate made of an aluminum alloy, and a member having a refrigerant flow passage formed therein for allowing a refrigerant to pass therethrough is joined to another surface of the plate. For example, Patent Document 1 discloses a configuration in which an aluminum brazing sheet having a filler metal layer provided on its surfaces is used as a plate to be joined to a partition, and the partition and a member having a refrigerant flow passage formed therein are joined by brazing through the filler metal layer. In such a configuration, the filler metal layer contains oxidizing elements such as Li and Mg, which makes it possible to perform brazing in an inert gas atmosphere without flux.

### PRIOR ART LITERATURE

### Patent Document

Patent Document 1: JP-A-2015-010806

### SUMMARY OF THE INVENTION

### PROBLEM TO BE SOLVED BY THE INVENTION

However, in the configuration disclosed in Patent Document 1, because the filler metal layer contains oxidizing elements, i.e. Li, Mg and so on, the joining state may deteriorate in some cases when the oxygen concentration and/or the dew point in the brazing atmosphere are/is high. It is presumably considered because Li and/or Mg contained in the filler metal react(s) with the oxygen and/or water vapor in the brazing atmosphere to form an oxide on the surface of the filler metal during heating. For example, there is a risk that the oxide thus formed may inhibit formation of fillets to cause fillet tearings. In case the fillet tearings occur in the ice making tray, water enters the fillet tearings or a hole resulted from the fillet tearings at ice making. And, the water may be froze and expanded to cause breakage of the fillets (freeze fracture). There is a risk that ice-making may be impossible. As described above, because the deterioration of brazability causes serious damage to the quality of the ice making tray, it is required to surely control the oxygen concentration and the dew points in the brazing atmosphere. However, because the oxygen concentration and the dew point in the brazing atmosphere fluctuate under influence of seasonal fluctuation of a dew point in the air, it has been required to improve the control in order to keep stable brazability through a year.

The present invention has been made in view of this background to provide a method for manufacturing an ice making tray that exhibits stable brazability.

### MEANS FOR SOLVING THE PROBLEM

One aspect of the present invention provides a method for manufacturing an ice making tray, including the steps of:
preparing a base plate formed of a brazing sheet including:
   a core material composed of an aluminum alloy;
      and
   a filler metal layer provided on both surfaces of the core material, the filler metal layer including a first layer composed of an aluminum alloy in which the Mg content is restricted to 0.15% or less; and a second layer positioned closer to the core material than the first layer and composed of an aluminum alloy containing Mg: 0.2 to 5% wherein at least one of the first layer and the second layer further contain Si: 4 to 13%;
assembling a partition member and a flow passage forming member to the base plate such that the partition member is in contact with one surface of the base plate and the flow passage forming member is in contact with another surface of the base plate, the partition member being formed in a grid shape so as to define a plurality of ice making compartments, the flow passage forming member having a refrigerant flow passage formed therein to allow a refrigerant to pass therethrough; and
brazing the partition member, the flow passage forming member, and the base plate through the filler metal layer without using any flux.

### EFFECTS OF THE INVENTION

According to the method for manufacturing an ice making tray, the Mg content in the first layer of the filler metal layer is restricted to 0.15% or less, and it prevents formation of sturdy oxide films on the surface of the first layer in the manufacturing process of the brazing sheet as the raw material for the base plate and during brazing-heating in the brazing step. The Mg content in the second layer positioned closer to the core material than the first layer in the filler metal layer is 0.2 to 5%. Mg contained in the second layer diffuses to the surface of the first layer during brazing-heating to embrittle the oxide film on the first layer. Further, after initiating melting of the filler metal, the diffusion of the Mg contained in the second layer to the surface of the first layer is more activated. And, as described above, because the formation of sturdy oxide films on the surface of the first layer is prevented, the oxide film on the first layer is made to be easily embrittled by the Mg diffused from the second layer. Consequently, even in the case that partial pressure of oxygen and a dew point in the brazing atmosphere is so high, breakdown of the oxide film is facilitated to improve the joinability by the filler metal layer to thereby exhibit stable brazability. Thus, although the partial pressure of oxygen and the dew point in the brazing atmosphere fluctuate seasonally, stable brazability can be attained through a year. It is noted that in case the Mg content in the second layer is less than 0.2%, the effect of breaking down the oxide film is made poor, so that the wettability decreases. In case the Mg content exceeds 5%, rolling cracks tend to occur during the rolling.

In addition, because in the first layer constituting a surface layer, the content of Mg acting as an oxidizing element is restricted to 0.15% or less, formation of an oxide film on the surface of the filler metal, which interferes formation of fillets, is prevented during heating. In this way, the formation of the fillets at a brazed portion is facilitated, and occurrence of tearing of the fillets is prevented. Consequently, in ice-making using the ice making tray, freeze fracture of the fillets can be eliminated to thereby attain the stable brazability.

Further, at least one of the first layer and the second layer further contains Si: 4 to 13%. In case both Si contents in the first layer and the second layer are less than 4%, a molten filler metal melted from the filler metal layer made up of the first layer and the second layer is poor in fluidity in a brazing process. Therefore, fillets are hardly formed at the brazing portion, and thereby the brazability decreases. In case both Si contents in the first layer and the second layer exceed 13%, the fluidity of the molten filler metal excessively raises in the brazing process. Therefore, the fillets formed at the brazing portion excessively spread and cannot have sufficient thickness, and thereby the brazability decreases. In addition, because the molten filler metal in the filler metal layer becomes excessive, the dissolved amount of the base plate, the partition member, and the flow passage forming member serving as a base metal of the brazing portion increases. Accordingly, a coarse primary crystal Si is easily formed in the filler metal, so that the possibility to produce melts holes at the time of brazing raises and corrosion resistance deteriorates. Further, when molding the brazing sheet as a material for forming the base plate, rolling cracks easily occur in hot clad rolling. As described above, because at least one of the first layer and the second layer contains Si: 4 to 13%, production of the molten hole, deterioration of the corrosion resistance, and occurrence of the rolling cracks can be prevented while satisfactory supply of the molten filler metal can be achieved.

In addition, according to the method for manufacturing an ice making tray, it is possible to manufacture the ice making tray without applying any flux in an inert gas atmosphere by using the brazing sheet. Further, because the method does not require a vacuum atmosphere, inexpensive mass-production can be realized. Furthermore, because the base plate is formed of the brazing sheet with the clad structure as described above, it is possible to manufacture an ice making tray exhibiting stable brazability.

As described above, the aforementioned aspect makes it possible to provide the method for manufacturing an ice making

### BRIEF DESCRIPTION OF THE DRAWINGS

Figure 1 is a perspective view of an ice making tray according to Embodiment 1.
Figure 2 is an exploded perspective view of the ice making tray according to Embodiment 1.
Figure 3 is an enlarged fragmentary sectional view of a base plate to be brazed in Embodiment 1.
Figure 4 is a bottom plan view of the ice making tray according to Embodiment 1.
Figure 5 is an enlarged fragmentary sectional view taken along the line A-A of Figure 4.
Figure 6 is an enlarged fragmentary sectional view of an outside partition part to be brazed in Embodiment 1.

### MODE FOR CARRYING OUT THE INVENTION

In this description, an aluminum alloy is defined to include not only aluminum alloys in the narrow sense but also pure aluminum, as a general term including any metal mainly composed of aluminum.

The first layer may have an Mg content restricted to 0.15% or less, and contains Si: 4 to 13%, the remainder being composed of Al and unavoidable impurities, and the second layer may contain Mg: 0.2 to 5% and Si: 4 to 13%, the remainder being composed of Al and unavoidable impurities. In this case, because both the first layer and the second layer contain Si: 4 to 13%, an appropriate amount of molten filler metal is supplied from the first layer and the second layer in the brazing process. Consequently, production of the molten hole, deterioration of the corrosion resistance, and occurrence of the rolling cracks can be satisfactorily prevented while attaining satisfactory brazability.

In the case where the first layer has the Mg content restricted to 0.15% or less, and contains Si: 4 to 13%, the remainder being composed of Al and unavoidable impurities, and the second layer contains Mg: 0.2 to 5% and Si: 4 to 13%, the remainder being composed of Al and unavoidable impurities, the first layer preferably has a cladding ratio of 1.5 to 20%, and the second layer preferably has a cladding ratio of 1.5 to 20%, and the sum of the cladding ratios of the first layer and the second layer is preferably 25% or less. In this case, the effect of suppressing formation of oxides by the first layer can be sufficiently obtained in the brazing process. In addition, the molten filler metal required for brazing-joining can be supplied from the first layer and the second layer in a necessary amount. Further, a necessary amount of Mg required for embrittlement and breakdown of the oxides of the first layer is supplied from the second layer.

The first layer may have an Mg content restricted to 0.15% or less, the remainder being composed of Al and unavoidable impurities, and the second layer may contain Mg: 0.2 to 5% and Si: 4 to 13%, the remainder being composed of Al and unavoidable impurities. In this case, the first layer constituting a surface layer prevents formation of the oxides on the surface of the filler metal during heating. The second layer constituting an intermediate layer supplies Mg required for embrittlement and breakdown of an oxide film on the surface of the filler metal during heating, and molten filler metal for brazing. Consequently, production of the molten hole, deterioration of the corrosion resistance, and occurrence of the rolling cracks can be satisfactorily prevented while ensuring satisfactory brazability.

In the case where the first layer has the Mg content restricted to 0.15% or less, the remainder being composed of Al and unavoidable impurities, and the second layer contains Mg: 0.2 to 5% and Si: 4 to 13%, the remainder being composed of Al and unavoidable impurities, the first layer preferably has a cladding ratio of 0.5 to 2%, and the second layer preferably has a cladding ratio of 2 to 20%. In this case, the effect of suppressing formation of oxides by the first layer constituting a surface layer, the effect of breaking down the oxide film by Mg in the second layer constituting an intermediate layer, and supply of the molten filler metal are sufficiently ensured in the brazing process.

The first layer may have an Mg content restricted to 0.15% or less, and may contain Si: 4 to 13%, the remainder being composed of Al and unavoidable impurities, and the second layer may contain Mg: 0.2 to 5%, the remainder being composed of Al and unavoidable impurities. In this case, the effect of suppressing formation of oxides by the first layer constituting a surface layer can be satisfactorily obtained, and the molten filler metal required for brazing-joining is supplied. In addition, the second layer constituting an intermediate layer supplies Mg required for embrittlement and breakdown of an oxide film on the surface of the filler metal during heating. Consequently, production of the molten hole, deterioration of the corrosion resistance, and occurrence of the rolling cracks can be satisfactorily prevented while ensuring satisfactory brazability.

In the case where the first layer has an Mg content restricted to 0.15% or less, and contain Si: 4 to 13%, the remainder being composed of Al and unavoidable impurities, and the second layer contains Mg: 0.2 to 5%, the remainder being composed of Al and unavoidable impurities, the first layer preferably has a cladding ratio of 2 to 20%, and the second layer preferably has a cladding ratio of 0.5 to 4%. In this case, the effect of suppressing formation of oxides by the first layer constituting a surface layer, supply of the molten filler metal, and the effect of breaking down the oxide film by the second layer constituting an intermediate layer are sufficiently ensured in the brazing process.

At least one of the first layer and the second layer further preferably contains Bi: 0.004 to 0.4%. In this case, the space fillability of the molten filler metal can be enhanced by decreasing its surface tension and/or increasing its fluidity in the brazing process. It is noted that when the Bi content is less than 0.004%, the space-fillability enhancing effect is poor. Meanwhile, the Bi content exceeds 0.4%, the surface tension excessively decreases, and the decrease adversely affects formation of the fillets. In addition, the filler metal is made easily-oxidizable, and the wettability of the molten filler metal decreases.

The partition member and the flow passage forming member are preferably made of an aluminum alloy. In this case, the weight of the ice making tray can be reduced. In addition, because the ice making tray is entirely made of the aluminum alloy, the recyclability is improved in comparison with that of ice making trays made of different kinds of materials because the labor for classification at disposal can be eliminated.

The partition member includes an outside partition part constituting an outer wall of the plurality of ice making compartments. The outside partition part is preferably formed of the brazing sheet including the core material of the aluminum alloy and the filler metal layer formed on at least one surface of the core material. In this case, the brazability between the outside partition part and the base plate is further improved.

The outside partition part is preferably formed of the brazing sheet having the filler metal layer formed only on one surface opposite to a surface facing the ice making compartments. If in the outside partition part, the filler metal layer is present on the surface facing the ice making compartments (inside surface), a portion of the molten filler metal on the outside surface opposite to the inside surface is joined to the molten filler metal on the inside surface through the clearance between the outside partition part and the base plate in the brazing process and is drawn into inside of the ice making compartments. As a result, fillet tearings easily occur at brazed portion formed by the outside partition part and the base plate. However, as described above, when the filler metal layer is formed only on the surface opposite to the surface facing the ice making compartments (outside surface), the molten filler metal in the filler metal layer is hardly drawn into the inside of the ice making compartments, and thus occurrence of fillet tearings on the outside surface is prevented. Accordingly, the formed state of the fillets located outside of the ice making compartments is made satisfactory, and the joinability of the outside partition part to the base plate is improved.

The core material is preferably composed of a 6000 series aluminum alloy. In this case, part of Mg contained in the 6000 series aluminum alloy forming the core material is diffused on the surface of the molten filler metal at the time of melting of the filler metal layer, following diffusion of the Mg contained in the second layer. Consequently, the Mg contained in the core material exhibits the effect of secondarily breaking down the oxide film on the filler metal layer.

### Embodiment

### (Embodiment 1)

A method for manufacturing an ice making tray 1 according to the present embodiment includes a preparing step, an assembling step, and brazing step.

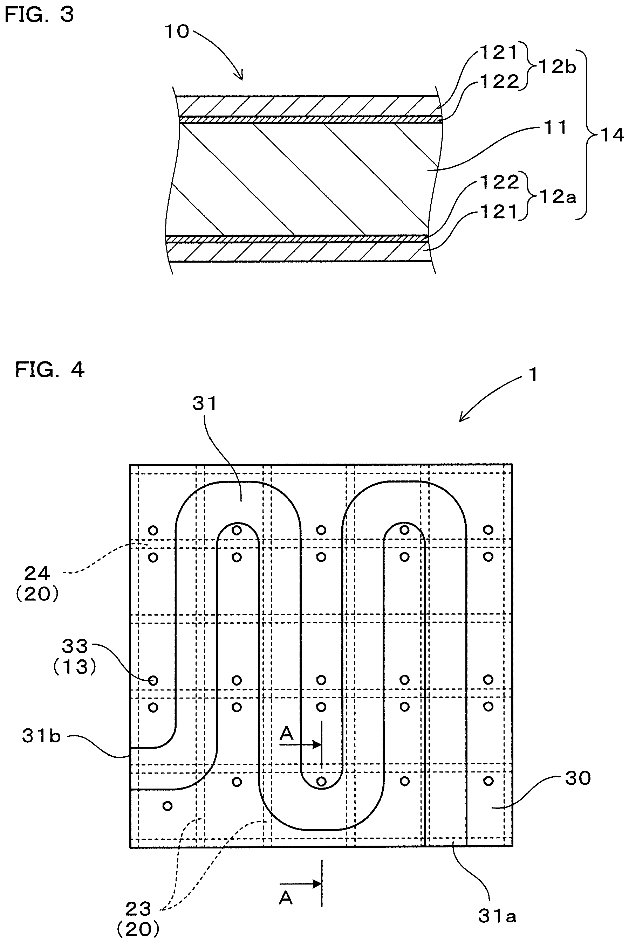

In the preparing step, as shown in Figure 3, a base plate 10 formed of a brazing sheet 14 including a core material 11 and filler metal layers 12a and 12b provided on both surfaces of the core material 11 is prepared.

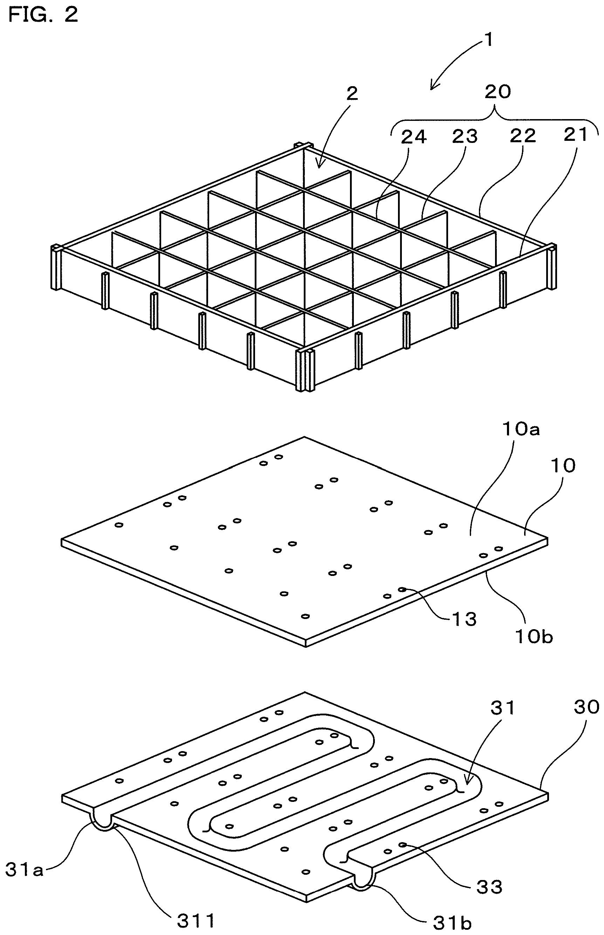

In the assembling step, as shown in Figure 2, a partition member 20 and a flow passage forming member 30 are assembled to the base plate 10 such that the partition member 20 is in contact with one surface 10a of the base plate 10 and the flow passage forming member 30 is in contact with another surface 10b of the base plate 10. The partition member 20 is formed in a grid shape so as to define a plurality of ice making compartments 2. The flow passage forming member 30 has a refrigerant flow passage 31 formed therein to allow a refrigerant to pass therethrough.

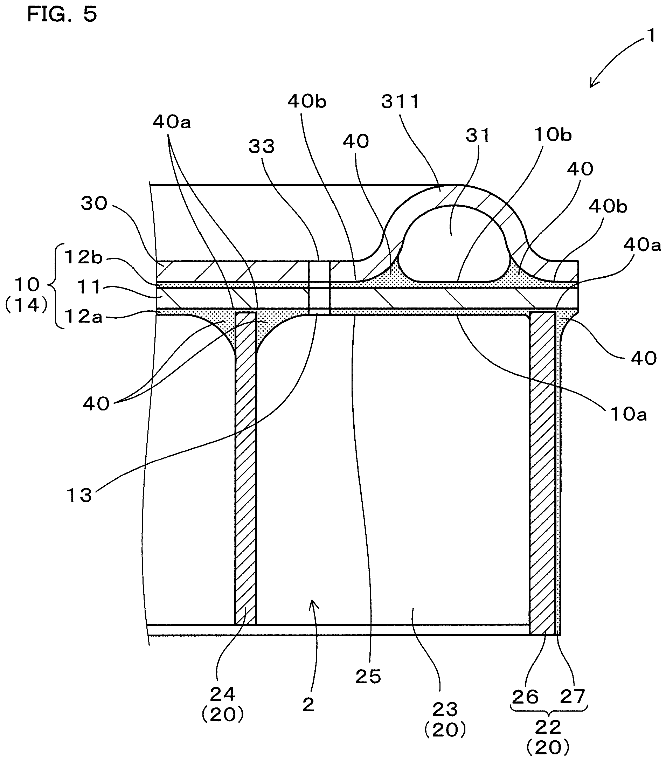

In the brazing step, as shown in Figure 5, the partition member 20, the flow passage forming member 30, and the base plate 10 are brazed through the filler metal layers 12a and 12b without using any flux.

In the brazing sheet 14 forming the base plate 10, the core material 11 is composed of an aluminum alloy. The filler metal layers 12a and 12b includes a first layer 121 composed of an aluminum alloy in which the Mg content is restricted to 0.15% or less; and a second layer 122 positioned closer to the core material 11 than the first layer 121 and composed of an aluminum alloy containing Mg: 0.2 to 5%. At least one of the first layer 121 and the second layer 122 further contain Si: 4 to 13%.

In the present embodiment, working materials 1 to 4 each having the composition shown in Table 1 were used as the brazing sheets 14 to prepare the ice making tray 1.

### [Table 1]

**(Table 1)**

| Materials | First Layer | Cladding Ratio | Second Layer | Cladding Ratio | Core Material |
|---|---|---|---|---|---|
| Working material 1 | Al-10%Si (Mg:less than 0.05%) | 8.5% | Al-10%Si-2.6%Mg-0.25%Bi | 1.5% | Aluminum alloy 6951 (Al-0.35%Si-0.25%Cu-0.6%Mg) |
| Working material 2 | Al-10%Si-0.02%Bi (Mg:less than 0.05%) | 10% | Al-2.6%Mg | 2% | Aluminum alloy 3003 (Al-0.27%Si-0.6%Fe-0.15%Cu-1.2%Mn) |
| Working material 3 | Aluminum Alloy 1050 (Mg:less than 0.05%) | 0.5% | Al-10%Si-0.5%Mg-0.02%Bi | 10% | Aluminum alloy 3003 (Al-0.27%Si-0.6%Fe-0.15%Cu-1.2%Mn) |
| Working material 4 | Al-7.5%Si (Mg:0.05% or less) | 1.5% | Al-10%Si-0.5%Mg | 9% | Aluminum alloy 6951 (Al-0.35%Si-0.25%Cu-0.6%Mg) |
| Comparative material | Al-10%Si-0.03%Mg-0.05%Bi | | | 10% | Aluminum alloy 6951 (Al-0.35%Si-0.25%Cu-0.6%Mg) |

Hereinafter, the method for manufacturing the ice making tray 1 according to the present embodiment will be described in detail.

First, as shown in Figure 3, the preparing step is performed, in which the brazing sheet 14 with a clad structure in which the filler metal layers 12a and 12b are joined to the core material 11. Then, each brazing sheet 14 made of the working materials 1 to 4 is cut into a rectangular shape with a predetermined size to prepare the base plate 10 shown in Figure 2, as being made of the working materials 1 to 4. It is noted that Figure 3 is a schematic view for describing a layer structure of the brazing sheet 14, and does not show actual cladding ratios of the first layer 121 and the second layer 122. The actual cladding ratio of each layer of the working materials 1 to 4 is shown in Table 1.

The base plate 10 is provided with air holes 13 serving as a penetrating hole each located at a position corresponding to a bottom portion 25 of each ice making compartment 2. It is noted that the air hole 13 is formed at a position not overlapped with the refrigerant flow passage 31 to be described later. The air hole 13 may be formed preliminarily in the preparing step prior to the brazing process to be described later, or may be formed after the brazing step.

Next, as shown in Figure 2, outside partition parts 21 and 22 are assembled along the periphery of the base plate 10, and inside partition parts 23 and 24 arranged in a grid array with equal intervals are fitted inside of the outside partition parts 21 and 22 to complete the partition member 20. It is noted that the outside partition parts 21 and 22, and the inside partition parts 23 and 24 are preliminarily provided with slits (not shown in any figure) formed so that the outside partition parts and the inside partition parts are fitted to each other to be assembled.

Thereafter, the assembling step is performed, in which the partition member 20 and the flow passage forming member 30 are assembled to the base plate 10. In the assembling step, the partition member 20 is brought into contact with the one surface 10a of the base plate 10 such that the outside partition parts 21 and 22 are disposed along the periphery of the base plate 10, and the flow passage forming member 30 having a recessed portion 311 formed therein is brought into contact with another surface 10b, all of which are pressed with a jig.

The partition member 20, as shown in Figure 2, includes the outside partition parts 21 and 22 which constitute an outer wall of the plurality of the ice making compartments 2, and the inside partition parts 23 and 24 which constitute an inner wall. The outside partition parts 21 and 22 are assembled in a frame such that the outside part 21 to be longitudinally arranged and the outside part 22 to be laterally arranged are disposed along the periphery of the base plate 10. Inside of the outside partition parts 21 and 22, the inside partition part 23 to be longitudinally arranged and the inside partition part 24 to be laterally arranged are assembled in a grid with equal intervals. In this way, the plurality of the ice making compartments 2 is defined. In the present embodiment, four inside partition parts 23 and four inside partition parts 24 are provided to form twenty five ice making compartments 2 in total partitioned into five partitions in the longitudinal direction and five partitions in the lateral direction.

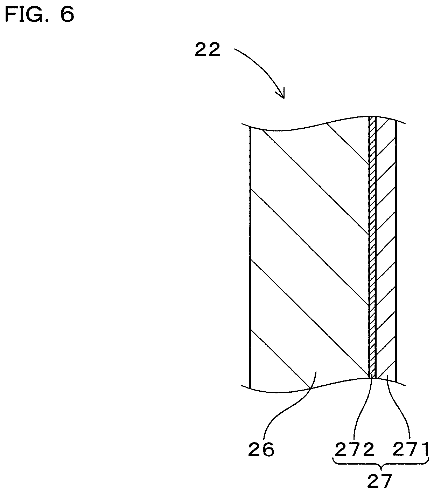

In the partition member 20, the outside partition part 22 is formed of the brazing sheet with a clad structure made up of the core material 26 of an aluminum alloy and the filler metal layer 27 formed on the surface of the core material 26 in the state of prior to the brazing process, the surface being opposite to the surface that faces the ice making compartment 2, as shown in Figure 6. The filler metal layer 27 in the outside partition part 22 includes a first layer 271 and a second layer 272.

In the present embodiment, the first layer 271 and the second layer 272 have the same compositions respectively as those of the first layer 121 and the second layer 122 of the filler metal layers 12a(12b) in the brazing sheet 14 forming the base plate 10. In other words, in the ice making tray 1 prepared using the base plate 10 formed of the brazing sheet 14 of the working material 1, the outside partition part 22 formed of the brazing sheet 14 of the working material 1 is used. Similarly, in the ice making tray 1 prepared using each base plate 10 formed of the brazing sheet 14 of the working materials 2 to 4, the outside partition part 22 formed of the brazing sheet 14 made of the working materials 2 to 4 correspondingly is used. It is noted that the outside partition part 21 also has the same structure as that of the outside partition part 22. Meanwhile, the inside partition parts 23 and 24 are composed of pure aluminum (1050).

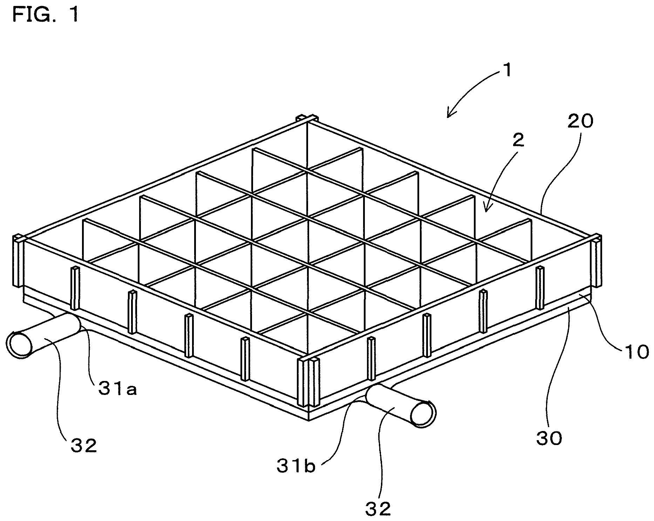

The contour of the flow passage forming member 30, as shown in Figure 4, has a rectangular flat plate shape corresponding to the contour of the base plate 10 in plan view. The flow passage forming member 30 is composed of pure aluminum (1000). The flow passage forming member 30, as shown in Figure 2, has a recessed portion 311 formed opened to the side of the base plate 10. The recessed portion 311, as shown in Figure 4, is continuously formed in a manner to extend along the inside partition part 23 while meandering in plan view. And, in the assembling step, the flow passage forming member 30, as shown in Figures 1 and 2, overlapped with the base plate 10 on another surface 10b of the base plate 10 so as to be coincident with the contour of the base plate 10 in plan view.

Next, the brazing step for brazing process is performed, in which the partition member 20 and the flow passage forming member 30 are brazed to the base plate 10 under pressure with a jig. The brazing process is performed in a brazing furnace under a nitrogen atmosphere at a material temperature of 600°C under an oxygen concentration of 10 ppm and a furnace temperature of 620°C without using any flux. After performing the brazing, slow cooling in the brazing furnace is performed to reach 560°C. Thus, the first layer 121 and the second layer 122 that constitute the filler metal layers 12a and 12b before the brazing process are melted and inseparably joined to each other as an integrated body, to thereby form the filler metal layers 12a and 12b subjected to the brazing process. Thereafter, the workpiece is taken out from the brazing furnace and is forcedly cooled. After cooling to room temperature, the jig is taken out.

In the brazing step, as shown in Figure 5, a portion of the filler metal layer 12a in the base plate 10 shown in Figure 3 is melted, flows along a contact part 40a formed between the one surface 10a of the base plate 10 and the partition member 20, and enters therebetween. In this way, the portion of the filler metal layer 12a thus melted serves as a filler metal for joining the one surface 10a of the base plate 10 and the partition member 20 to join the both by brazing. Thus, a fillet 40 is formed so as to cover the partition member 20 and the one surface 10a of the base plate 10, and partition member 20 is vertically erected on the one surface 10a of the base plate 10.

In addition, a portion of the filler metal layer 12b in the base plate 10 is melted, flows along a contact part 40b formed between the another surface 10b of the base plate 10 and the partition member 20, and enters therebetween. And, the portion of the filler metal layer 12b thus melted serves as a filler metal for joining the another surface 10b of the base plate 10 and the flow passage forming member 30 to join the both by brazing. Thus, the refrigerant flow passage 31 is formed between the recessed portion 311 and the another surface 10b of the base plate 10. Thereafter, a refrigerant introduction/discharge conduit 32 for introducing and discharging the refrigerant is welded to connection ports 31a and 31b, respectively. The refrigerant introduction/discharge conduit 32 is of a tubular member made of copper.

As shown in Figure 2, the flow passage forming member 30 is provided with air holes 33 at a position facing the corresponding air hole 13 in the base plate 10 in plan view. Each ice making compartment 2 is connected with the outside on the side of the flow passage forming member 30 through the air holes 13 and 33. The air holes 33 may be preliminarily formed prior to the brazing step, or may be formed after the brazing step. In the case where the air holes 13 are preliminarily formed through the base plate 10 prior to the brazing step, the air holes 33 of the flow passage forming member 30 may be formed each at a position opposing to each air hole 13 after the brazing step. Meanwhile, in the case where the air holes 13 are not preliminarily formed in the base plate 10 prior to the brazing step, the base plate 10 and the flow passage forming member 30 may be collectively bored to form the air holes 13 and the air holes 33 at the same time.

Next, a usage of the ice making tray 1 prepared by the aforementioned manufacturing method will be described in detail.
First, the ice making tray 1 is disposed in an ice maker (not shown in any figure) with the opening side of the ice making compartments 2 (the side opposite to the flow passage forming member 30) positioned on a lower side in the direction of gravity. Then, a refrigerant is supplied from the ice maker through the refrigerant introduction/discharge conduit 32 to the refrigerant flow passage 31 to allow the refrigerant to circulate therethrough. Thus, each ice making compartment 2 is put in the cooling state.

Subsequently, by feeding water to each ice making compartment 2 from the lower side in the direction of gravity, ice grows inside of each ice making compartment 2 by degrees to fill the compartments 2 with the ice.

Thereafter, by circulating a heat medium in the refrigerant flow passage 31, part of the ice formed inside of each ice making compartment 2 is melted at the portion where it contacts the base plate 10 and the partition member 20. And, by the air flowing into each ice making compartment 2 through the air holes 13 and 33, the ice made in each ice making compartment 2 is pushed out therefrom to drop down into an ice storing container provided below (not shown in any figure) and stored.

### (Comparison Test 1)

Next, Comparison Test 1 was conducted for each ice making tray 1 prepared using the brazing sheet 14 made of the working materials 1 to 4 to evaluate the fillet formation states. It is noted that for use in a comparative example, an ice making tray 1 prepared using the brazing sheet made of the comparative material shown in Table 1 instead of the working materials 1 to 4 was employed. The method for preparing the ice making tray of the comparative example is the same as in the case of using the working materials 1 to 4.

Comparison Test 1 was conducted as follows. First, brazing sheets subjected to an etching treatment in 1% hydrofluoric acid for a predetermined time as a pretreatment prior to the brazing process, and brazing sheets not subjected to the aforementioned pretreatment were prepared. And, a base plate and a partition member each made of the corresponding brazing material were assembled and heated to 600°C in a nitrogen atmosphere to perform the brazing process. In this way, an ice making tray was completed by brazing the base plate and the partition member through the filler metal layer without using any flux under heating conditions 1 and 2 to be described later. The heating condition 1 includes an oxygen concentration set to be 5 ppm and a dew point set to be -68°C. The heating condition 2 includes an oxygen concentration set to be 30 ppm and a dew point set to be - 49°C.

Next, the fillet formation states in the working materials 1 to 4 and the comparative material were evaluated by visual observation. A basis of evaluation is as follows. Cases, in which the fillets are completely even and any fillet tearings ware not found, were assessed as "⊚", a case, in which the fillets are not considered to be completely even but no tearing was found, were assessed as "○", and cases, in which fillet tearings were partially found, were assessed as "Δ", and a case, in which fillet tearings were found a lot, were assessed as "×". The evaluation results are shown in Table 2.

### [Table 2]

**(Table 2)**

| Materials | Pretreatment | <Heating Condition 1> Oxygen Concentration 5ppm Dew Point -68°C | <Heating Condition 2> Oxygen Concentration 30ppm Dew Point -49°C |
|---|---|---|---|
| Working material 1 | Done | ⊚ | ⊚ |
| Working material 1 | Not done | ⊚ | ○ |
| Working material 2 | Done | ⊚ | ⊚ |
| Working material 2 | Not done | ⊚ | ○ |
| Working material 3 | Done | ⊚ | ⊚ |
| Working material 3 | Not done | ⊚ | ○ |
| Working material 4 | Done | ⊚ | ⊚ |
| Working material 4 | Not done | ⊚ | ○ |
| Comparative Material | Done | ⊚ | ○ |
| Comparative Material | Not done | Δ | × |

As shown in Table 2, the working materials 1 to 4 exhibit satisfactory fillet formation states regardless of whether the pretreatment was conducted or not, under the heating condition 1, i.e. the condition in which the oxygen concentration and the dew point are relatively low. Meanwhile, in the comparative material, the fillet formation states were satisfactory in the case of performing the pretreatment, but fillet tearings were partially found in the case of not performing the pretreatment.

In the working materials 1 to 4, the fillet formation states are satisfactory in the case of performing the pretreatment, under heating condition 2, i.e. the condition that the oxygen concentration and the dew point are higher compared with those of the condition 1, and no fillet tearing was found even in the case of not performing the pretreatment. Meanwhile, in the comparative material, no fillet tearing was found in the case of performing the pretreatment, but a lot of fillet tearings were found in the case of not performing the pretreatment.

As can be understood from the above, under the condition that the oxygen concentration and the dew point are high (heating condition 2), a lot of fillet tearings occur in the comparative material when not performing the pretreatment, however, no fillet tearing occurs in the working materials 1 to 4 even when not performing the pretreatment. Thus, Comparison Test 1 clarifies that because the configurations of the working materials 1 to 4 prevent fillet tearings even under the condition that the oxygen concentration and the dew point are high, the freeze fracture of the fillets can be inhibited. And, it was confirmed that fluxless brazing without requirement of the pretreatment is made possible and stable brazability can be obtained through a year.

### (Comparison Test 2)

In addition, Comparison Test 2 was conducted for each ice making tray 1 prepared using the brazing sheet 14 made of the working materials 1 to 4 and an ice tray prepared using the brazing sheet made of the comparative material to further evaluate the fillet formation states.

In each of the working materials 1 to 4, a configuration in which the outside partition part 22 includes a brazing sheet having a filler metal layer 27 formed only on one surface of a core material 26 opposite to the surface facing the ice making compartments 2 (a single-side filler metal layer), and a configuration in which an outside partition part includes a brazing sheet having the filler metal layer 27 formed on both surfaces (a both-side filler metal layer) are prepared.

Similarly, in the comparative material, a configuration in which the outside partition part includes a brazing sheet having the single-side filler metal layer, and a configuration in which the outside partition part includes a brazing sheet having the both-side filler metal layer were prepared.

It is noted that test and evaluation procedures in Comparison Test 2 was the same as those in Comparison Test 1 described above. But, the working materials 1 to 4 were not subjected to the pretreatment, and the comparative material was subjected to the pretreatment. The brazing process was performed under heating to 600°C in a nitrogen atmosphere under heating conditions 3 and 4. Under the heating condition 3, an oxygen concentration was set to be 32 ppm, and a dew point was set to be -51°C. Under the heating condition 4, an oxygen concentration was set to be 56 ppm, and a dew point was set to be -45°C. The evaluation results are shown in Table 3 as below.

### Table 3

**(Table 3)**

| Materials | Filler Metal Layer | <Heating Condition 3> Oxygen Concentration 32ppm Dew Point -51°C | <Heating Condition 4> Oxygen Concentration 56ppm Dew Point -45°C |
|---|---|---|---|
| Working material 1 (No pretreatment) | Single-side | ⊚ | ○ |
| | Both-side | ○ | Δ |
| Working material 2 (No pretreatment) | Single-side | ⊚ | ○ |
| | Both-side | ○ | Δ |
| Working material 3 (No pretreatment) | Single-side | ⊚ | ○ |
| | Both-side | ○ | Δ |
| Working material 4 (No pretreatment) | Single-side | ⊚ | ○ |
| | Both-side | ○ | Δ |
| Comparative material (Pretreatment has been done) | Single-side | ⊚ | Δ |
| | Both-side | ○ | × |

As shown in Table 3, in the working materials 1 to 4 that have not been subjected to the pretreatment, the fillet formation states were satisfactory in the case of the single-side filler metal layer under the heating condition 3, i.e. the condition that the oxygen concentration is higher than that under the heating condition 2 to some extent and the dew point is lower than that under the heating condition 2. In the case of the both-side filler metal layer, although the fillet formation states were inferior to those in the case of the single-side filler metal layer, no fillet tearing occurred. It is noted that the comparative material was subjected to the pretreatment and the evaluation results were the same as those in the working materials 1 to 4.

In the working materials 1 to 4, no tearing of the fillets occurred in the case of the single-side filler metal layer, but tearing occurred partially in the case of the both-side filler metal layer under the heating condition 4, i.e. the condition that the oxygen concentration and the dew point are higher than those under the heating condition 3. Meanwhile, in the comparative material, fillet tearings occurred partially in the case of the single-side filler metal layer, and tearing occurred a lot in the case of the both-side filler metal layer.

As can be understood from the above, it was confirmed from Comparison Test 2 that the filler metal layer in the brazing sheet for forming the outside partition part is preferably provided only on the surface opposite to the surface facing the ice making compartments 2. This is because the molten filler metal forming the fillets outside of the ice making compartments 2 is prevented from being drawn inside of the ice making compartments 2 by capillarity at the time of brazing the outside partition part, thereby preventing occurrence of fillet tearings. Accordingly, the formation state of the fillets 40 positioned outside of the ice making compartments 2 can be made satisfactory, and the joinability of the outside partition parts 21 and 22 to the base plate 10 can be improved.

Functions and effects of the method for manufacturing the ice tray 1 are described in detail on the basis of Comparison Tests 1 and 2 described above. According to the method for manufacturing the ice tray 1 in the present embodiment, in either case of the working materials 1 to 4, the Mg content in each first layer 121 of the filler metal layers 12a and 12b is 0.05% or less, and it prevents formation of sturdy oxide films on the surface of the first layer 121 in the manufacturing process of the brazing sheet 14 as a raw material for the base plate 10 and during brazing-heating. In addition, in either case of the working materials 1 to 4, the Mg content in each second layer 122 of the filler metal layers 12a and 12b, positioned closer to the core material 11 than each first layer 121 is 0.5% or 2.6%. Mg contained in the second layer 122 diffuses to the surface of the first layer 121 during brazing-heating to embrittle the oxide film on the first layer 121. Further, after initiating melting of the filler metal layers 12a and 12b, the diffusion of the Mg contained in the second layer 122 to the surface of the first layer 121 is more activated. And, as described above, because formation of sturdy oxide films on the surface of the first layer 121 is prevented, the oxide film on the first layer 121 is made to be easily embrittled by the Mg diffused from the second layer 122. Consequently, breakdown of the oxide film is facilitated to improve the joinability by the filler metal layers 12a and 12b to thereby exhibit stable brazability.

It is noted that in the case where the Mg content in the first layer 121 is restricted to 0.15% or less, and the second layer 122 contains Mg: 0.2 to 5%, the equivalent functions and effects can be achieved.

Further, in the working materials 1 and 4, the first layer 121 and the second layer 122 contain Si: 10%. In the working material 2, the first layer 121 contains Si: 10%. In the working material 3, the second layer 122 contains Si: 10%. Accordingly, the molten filler metal in the first layer 121 and the second layer 122 which contain Si: 10% exhibit appropriate fluidity in the brazing process. Thus, the fillet 40 having an appropriate thickness is formed at the brazed portion to thereby exhibit high brazability. In addition, the first layer 121 and the second layer 122 which contain Si: 10% are appropriately melted and excessive supply of the molten filler metal is prevented, so that the base plate 10, the partition member 20, and the flow passage forming member 30 hardly dissolve as a base metal at the brazed portion. As a result, the raise of the possibility to produce a molten hole at brazing and the deterioration of corrosion resistance can be prevented. Further, the occurrence of rolling cracks which could be caused by local melting in hot clad rolling at the time of molding the brazing sheet 14 as a material for forming the base plate 10 can be prevented. In addition, the Mg contained in the second layer 122 exhibits the effect of breaking down the oxide film, improves the wettability, and makes the rolling cracks hard to occur.

In the present embodiment, as shown in Table 1, the first layer 121 has an Mg content of 0.05% or less, contains Si: 10%, the remainder being composed of Al and unavoidable impurities, and the second layer 122 contains Mg: 2.6% and Si: 10%, the remainder being composed of Al and unavoidable impurities in the working material 1. In the working material 4, the first layer 121 has an Mg content of 0.05% or less, contains Si: 10% the remainder being composed of Al and unavoidable impurities, and the second layer 122 contains Mg: 0.5% and Si: 10%, the remainder being composed of Al and unavoidable impurities, in the working material 4. Thus, in the working materials 1 and 4, both the first layer 121 and the second layer 122 contain Si in an appropriate amount, so that an appropriate amount of molten filler metal is supplied from the first layer 121 and the second layer 122 at the time of the brazing process. Consequently, production of the molten hole, deterioration of the corrosion resistance, and occurrence of the rolling cracks can be satisfactorily prevented while attaining satisfactory brazability. It is noted that in the case where the first layer 121 has an Mg content restricted to 0.15% or less, and contains Si: 4 to 13%, the remainder being composed of Al and unavoidable impurities, and the second layer 122 contains Mg: 0.2 to 5% and Si: 4 to 13%, the remainder being composed of Al and unavoidable impurities, the equivalent functions and effects can be achieved.

According to the present embodiment, as shown in Table 1, the first layer 121 has a cladding ratio of 10%, and the second layer 122 has a cladding ratio of 2%, the sum of the cladding ratios of the first layer and the second layer being 25% or less in the working material 1. In the working material 1, the first layer 121 has a cladding ratio of 1.5%, and the second layer 122 has a cladding ratio of 9.0%, the sum of the cladding ratios of the first layer and the second layer being 25% or less. Thus, in the working materials 1 and 4, the effect of suppressing formation of oxides by the first layer 121 can be sufficiently obtained, and the molten filler metal required for brazing-joining is sufficiently supplied from the second layer 122 in the brazing process. In addition, the second layer 122 sufficiently supplies Mg required for embrittlement and breakdown of an oxide film on the surface of the first layer 121. It is noted that in the case where the first layer 121 has a cladding ratio of 1.5 to 20%, and the second layer 122 has a cladding ratio of 1.5 to 20%, the sum of the cladding ratios of the first layer 121 and the second layer 122 being 25% or less, the equivalent functions and effects can be achieved.

In the present embodiment, as shown in Table 1, the first layer 121 is composed of pure aluminum (1050) and the second layer 122 has the Mg content of 0 5% in the working material 3. Thus, in the working material 3, formation of sturdy oxide films on the surface of the first layer 121 is even more prevented in the manufacturing process of the brazing sheet 14 as a raw material for the base plate 10 and during brazing-heating. In addition, because the Mg content in the second layer 122 is 0.5%, Mg contained in the second layer 122 diffuses to the surface of the first layer 121 during brazing-heating to embrittle the oxide film on the first layer 121, so that breakdown of the oxide film is facilitated. Thus, the joinability by the filler metal layers 12a and 12b is improved to thereby exhibit stable brazability. It is noted that in the case where the first layer 121 has an Mg content restricted to 0.15% or less, the remainder being composed of Al and unavoidable impurities, and the second layer 122 contains Mg: 0.2 to 5% and Si: 4 to 13%, the remainder being composed of Al and unavoidable impurities, the equivalent functions and effects can be achieved.

In the present embodiment, as shown in Table 1, the cladding ratio of the first layer 121 is set to 2%, and the cladding ratio of the second layer 122 is set to 10% in the working material 3. Accordingly, the effect of suppressing formation of oxides by the first layer 121 constituting a surface layer, the effect of breaking down the oxide film by Mg in the second layer 122 constituting an intermediate layer, and supply of the molten filler metal are sufficiently ensured in the brazing process. It is noted that in the case where the first layer 121 has a cladding ratio of 0.5 to 2%, and the second layer 122 has a cladding ratio of 2 to 20%, the equivalent functions and effects can be achieved.

In the present embodiment, as shown in Table 1, the first layer 121 has an Mg content of 0.05% or less, contains Si: 10%, the remainder being composed of Al and unavoidable impurities, and the second layer 122 contains Mg: 2.6%, the remainder being composed of Al and unavoidable impurities in the working material 2. Thus, the effect of suppressing formation of oxides by the first layer 121 constituting a surface layer can be sufficiently obtained, and the molten filler metal required for brazing-joining is supplied. In addition, the second layer 122 constituting an intermediate layer supplies Mg required for embrittlement and breakdown of an oxide film on the surface of the filler metal during heating. Consequently, production of the molten hole, deterioration of the corrosion resistance, and occurrence of the rolling cracks can be satisfactorily prevented while ensuring satisfactory brazability. It is noted that in the case where the first layer 121 has an Mg content restricted to 0.15% or less, and contains Si: 4 to 13%, the remainder being composed of Al and unavoidable impurities, and the second layer 122 contains Mg: 0.2 to 5%, the remainder being composed of Al and unavoidable impurities, the equivalent functions and effects can be achieved.

In the present embodiment, as shown in Table 1, the first layer 121 has a cladding ratio of 10%, and the second layer 122 has a cladding ratio of 2% in the working material 2. Accordingly, the effect of suppressing formation of oxides by the first layer 121 constituting a surface layer and the effect of breaking down the oxide film by Mg in the second layer 122 constituting an intermediate layer are sufficiently ensured in the brazing process. It is noted that in the case where the first layer 121 has a cladding ratio of 2 to 20%, and the second layer 122 has a cladding ratio of 0.5 to 4%, the equivalent functions and effects can be achieved.

In the present embodiment, as shown in Table 1, the second layer 122 contains Bi: 0.25% in the working material 1. The first layer 121 contains Bi: 0.02% in the working material 2. The second layer 122 contains Bi: 0.02% in the working material 3. In the working materials 1 to 3, Bi contained in the first layer 121 and the second layer 122 reduces the surface tension of the molten filler metal, and enhances the space fillability of the molten filler metal. In addition, Bi contained in the first layer 121 and the second layer 122 prevents occurrence of rolling cracks which could be caused by local melting in hot clad rolling at the time of forming the brazing sheet 14. It is noted that in the case where at least one of the first layer 121 and the second layer 122 further contains Bi: 0.004 to 0.4%, the equivalent functions and effects can be achieved.

In the present embodiment, the partition member 20 and the flow passage forming member 30 are made of an aluminum alloy. Accordingly, the ice making tray 1 can be made lightweight. In addition, because the ice making tray 1 is entirely made of the aluminum alloy, the recyclability is improved in comparison with that of ice making trays made of different kinds of materials because the labor for classification at disposal can be eliminated.

In the present embodiment, the partition member 20 includes the outside partition parts 21 and 22 constituting an outer wall of the plurality of ice making compartments 2, and the outside partition parts 21 and 22 are formed of the brazing sheet including the core material 26 of the aluminum alloy and the filler metal layer 27 formed on at least one surface of the core material 26. Thus, the brazability between the outside partition parts 21, 22 and the base plate 10 is further improved.

In the present embodiment, the outside partition parts 21 and 22 are formed of the brazing sheet having the filler metal layer 27 formed only on one surface opposite to a surface facing the ice making compartments 2. If the outside partition parts 21 and 22 have the filler metal layer on each surface facing the ice making compartments 2 (inside surface), a portion of the molten filler metal on the outside surface opposite to the inside surface is joined to the molten filler metal on the inside surface through the clearance between the outside partition parts 21 and 22 and the base plate 10 in the brazing process, and is drawn into inside of the ice making compartments 2. As a result, fillet tearings easily occur at the brazed portion formed by the outside partition parts 21 and 22, and the base plate 10. However, in the present embodiment, as described above, because the filler metal layer 27 is formed only on the surface opposite to the surface facing the ice making compartments 2 (outside surface), the molten filler metal in the filler metal layer 27 is hardly drawn into inside of the ice making compartments 2, and thus occurrence of fillet tearings on the outside surface is prevented. Accordingly, the formed state of the fillets located outside of the ice making compartments 2 is made satisfactory, and the joinability of the outside partition parts 21 and 22 to the base plate 10 is improved.

In the present embodiment, as shown in Table 1, in the ice making tray 1 prepared using the brazing sheet made of the working materials 1 or 4, the core material 11 is composed of a 6000 series aluminum alloy. And, part of Mg contained in the 6000 series aluminum alloy forming the core material is diffused on the surface of the molten filler metal at the time of melting of the filler metal layers 12a and 12b, following diffusion of the Mg contained in the second layer 122. Consequently, the Mg contained in the core material 11 exhibits the effect of secondarily breaking down the oxide film on the filler metal layer.

In addition, the 6000 series aluminum alloy has higher thermal conductivity than a 3000 series aluminum alloy. Therefore, the ice making tray 1 prepared using the brazing sheet 14 of the working materials 1 or 4 can be improved in its ice making capacity because the core material 11 of the base plate 10 is composed of the 6000 series aluminum alloy. In addition, because the 6000 series aluminum alloy is superior in strength, the thickness of the base plate 10 can be reduced to thereby also enhance the ice making capacity of the ice making tray 1. It is noted that because brazing-joining in the present embodiment is performed in an inert gas atmosphere without using any flux, deterioration in brazability to be caused by the usage of the 6000 series aluminum alloy is prevented.

In addition, the ice making tray 1 prepared using the brazing sheet 14 of the working materials 1 or 4 can be also improved in its strength after brazing because the 6000 series aluminum alloy is employed to form the core material 11 of the base plate 10 in comparison with the case of employing a 3000 series aluminum alloy as the core material.

According to the present embodiment, in the ice making tray 1 prepared using the brazing sheet 14 made of the working materials 1 or 4, the core material 26 in the outside partition parts 21 and 22 is also composed of the 6000 series aluminum alloy. Consequently, the ice making capacity and the strength in the ice making tray 1 is further improved for the same reason as in the case of employing the 6000 series aluminum alloy as the core material 11 of the base plate 10.

In the present embodiment, the inside partition parts 23 and 24 are made of pure aluminum. Because pure aluminum is superior in thermal conductivity, the cooling effect inside of the ice making compartments 2 is raised to thereby enhance the ice making capacity in the ice making compartments 2.

It is noted that not only the outside partition parts 21 and 22 constituting the outer wall of the ice making compartments 2 but also the inside partition parts 23 and 24 may be formed of the brazing sheet similarly in the base plate 10. In this case, the strength of the partition member 20 is entirely enhanced, the cooling effect for each ice making compartment 2 is raised, and the brazability to the base plate 10 in the entire partition member 20 is improved.

The flow passage forming member 30 is also made of the pure aluminum (1050). Because pure aluminum is superior in moldability, molding of the recessed portion 311 constituting a portion of the refrigerant flow passage 31 is made easy.

The flow passage forming member 30 is formed of a plate member provided with the recessed portion 311 having an opening on the base plate 10 side, and has the refrigerant flow passage 31 formed between the recessed portion 311 and the base plate 10. Thus, the another surface 10b of the base plate 10 forms a portion of the wall of the refrigerant flow passage 31, so that a refrigerant circulating the refrigerant flow passage 31 is brought in contact directly with the base plate 10. In this way, the cooling effect for the ice making compartments 2 by the refrigerant circulating the refrigerant flow passage 31 is raised to thereby enhance the ice making capacity.

In the present embodiment, the flow passage forming member 30 is formed of a plate member, and the refrigerant flow passage 31 is formed by the recessed portion 311 and the base plate 10. Instead, the flow passage forming member 30, which has been formed into a tubular member, is disposed on the another surface 10b of the base plate 10 in a meandering manner so as to form the refrigerant flow passage 31 with the tubular portion thereof.

As described above, according to the aforementioned aspect, it is possible to provide a method for manufacturing an ice making tray that exhibits stable brazability.

The present invention is not limited to the aforementioned embodiments, and can be applied to various embodiments within the scope that does not depart from the scope and spirit of the present invention.

## Claims

1. A method for manufacturing an ice making tray, comprising the steps of:
preparing a base plate formed of a brazing sheet including:
a core material composed of an aluminum alloy;
and
a filler metal layer provided on both surfaces of the core material, the filler metal layer including a first layer composed of an aluminum alloy in which an Mg content is restricted to 0.15% or less; and a second layer positioned closer to the core material than the first layer and composed of an aluminum alloy containing Mg: 0.2 to 5% wherein at least one of the first layer and the second layer further contain Si: 4 to 13%;
assembling a partition member and a flow passage forming member to the base plate such that the partition member is in contact with one surface of the base plate and the flow passage forming member is in contact with another surface of the base plate, the partition member being formed in a grid shape so as to define a plurality of ice making compartments, the flow passage forming member having a refrigerant flow passage formed therein to allow a refrigerant to pass therethrough; and
brazing the partition member, the flow passage forming member, and the base plate through the filler metal layer without using any flux.

2. The method according to claim 1,
wherein the first layer has an Mg content restricted to 0.15% or less, and contains Si: 4 to 13%, the remainder being composed of Al and unavoidable impurities, and
wherein the second layer contains Mg: 0.2 to 5% and Si: 4 to 13%, the remainder being composed of Al and unavoidable impurities.

3. The method according to claim 2, wherein the first layer has a cladding ratio of 1.5 to 20%, and the second layer has a cladding ratio of 1.5 to 20%, the sum of the cladding ratios of the first layer and the second layer being 25% or less.

4. The method according to claim 1,
wherein the first layer has an Mg content restricted to 0.15% or less, the remainder being composed of Al and unavoidable impurities, and
wherein the second layer contains Mg: 0.2 to 5% and Si: 4 to 13%, the remainder being composed of Al and unavoidable

5. The method according to claim 4, wherein the first layer has a cladding ratio of 0.5 to 2%, and the second layer has a cladding ratio of 2 to 20%.

6. The method according to claim 1,
wherein the first layer has an Mg content restricted to 0.15% or less, and contains Si: 4 to 13%, the remainder being composed of Al and unavoidable impurities, and
wherein the second layer contains Mg: 0.2 to 5%, the remainder being composed of Al and unavoidable impurities.

7. The method according to claim 6, wherein the first layer has a cladding ratio of 2 to 20%, and the second layer has a cladding ratio of 0.5 to 4%.

8. The method according to any one of claims 1 to 7, wherein at least one of the first layer and the second layer further contains Bi: 0.004 to 0.4%.

9. The method according to any one of claims 1 to 8, wherein the partition member and the flow passage forming member are made of an aluminum alloy.

10. The method according to any one of claims 1 to 9, wherein the partition member includes an outside partition part constituting an outer wall of the plurality of ice making compartments, the outside partition part being formed of the brazing sheet including the core material of the aluminum alloy and the filler metal layer formed on at least one surface of the core material.

11. The method according to claim 10, wherein the outside partition part is formed of the brazing sheet having the filler metal layer formed only on one surface opposite to a surface facing the ice making compartments.

12. The method according to any one of claims 1 to 11, wherein the core material is composed of a 6000 series aluminum alloy.
